# EUROPÄISCHE PATENTANMELDUNG

(11) **EP 1 168 157 A1**
(43) Veröffentlichungstag der Anmeldung: **02.01.2002**
(21) Anmeldenummer: 00810537.1
(22) Anmeldetag: 20.06.2000
(51) Int. Cl.: G06F 7/58

(54) **Verfahren und Zufallsgenerator zur Generierung einer Zufallszahl**

(71) Anmelder: It-Sec, IT-Security AG, 8048 Zürich (CH)
(72) Erfinder: Stalder, Alain, 8134 Adliswil (CH)
(74) Vertreter: Roshardt, Werner Alfred, Dipl.-Phys.

(57) **Zusammenfassung**

Bei einem Verfahren zur Generierung von Zufallszahlen (12) wird die Unsicherheit bei Hardwareeingriffen ausgenützt, indem zunächst ein schreibender Festplattenzugriff (7) durchgeführt wird. Danach wird in einer Zählerschlaufe (8) ein Zähler solange hochgezählt, bis die Systemuhr einen Tick weitergezahlt hat. Ein auf diese Weise bestimmter Zählerwert (9) weist bereits eine grosse Unsicherheit auf. Zur Generierung der eigentlichen Zufallszahl wird auf den Zählerwert jedoch zusätzlich eine Hashfunktion, beispielsweise eine MD5 Hash-Funktion angewendet. Zur Bildung der Zufallszahl (12) werden vom resultierenden Hashwert (11) jeweils nur die untersten zwei Bits verwendet, welche eine sehr hohe Zufälligkeit aufweisen. Um genügend grosse Zufallszahlen generieren zu können, wird das Verfahren in einer Schlaufe 13 entsprechend oft wiederholt. Die Zufallszahl kann entweder direkt weiter verwendet werden oder mit ihrer Hilfe wird der Startwert für einen Pseudo-Zufallsgenerator erzeugt.

## Beschreibung

### Technisches Gebiet

Die Erfindung betrifft ein Verfahren zur Generierung einer Zufallszahl, ein Verfahren zur Generierung eines Schlüssels für kryptographische Anwendungen in Nachrichtenübertragungssystemen sowie einen Zufallsgenerator mit einem Zähler, einem Taktgeber und einer Recheneinheit.

### Stand der Technik

Bei der Kommunikation über offene Systeme wie beispielsweise das Internet können Nachrichten von jedem, der über die entsprechende Ausrüstung und das notwendige Know-how verfügt, mitgehört werden. Um den Inhalt solcher Nachrichten vor unbefugtem Zugriff Dritter zu schützen, d. h. um die Vertraulichkeit zu gewährleisten, müssen sie verschlüsselt werden. Am deutlichsten wird dies beispielsweise bei der Übermittlung von Kreditkartennummern, von Zugangspasswörtern für Bankkonten oder von medizinischen Daten.

Aber nicht nur die Vertraulichkeit, sondern auch Authentizität (sowohl Absender als auch Empfänger sind diejenigen, für die sie sich ausgeben) und Integrität (die Nachrichten gelangen unverändert vom Absender zum Empfänger) sollten gewährleistet sein. Je nach Anforderung werden die Nachrichten entsprechend mit Hilfe bekannter, kryptographischer Verfahren verschlüsselt bzw. digital unterschrieben, wobei unterschiedliche Verfahren (beispielsweise symmetrische oder asymmetrische Verschlüsselungsverfahren) zur Anwendung kommen.

Bei praktisch allen kryptographischen Verfahren werden sogenannte Schlüssel verwendet. Solche Schlüssel sollen möglichst unvorhersagbar sein, d. h. für einen potentiellen Angreifer soll es praktisch unmöglich sein, die einzelnen Bits vorherzusagen. Dies ist nur möglich, wenn die einzelnen Bits eines Schlüssels zufällig sind.

Es sind verschiedene Zufallsgeneratoren bekannt, welche zur Generierung derartiger Schlüssel eingesetzt werden. Viele rein softwaremässig realisierte Zufallsgeneratoren beziehen ihre Unsicherheit aus dem unvorhersagbaren Verhalten des Benutzers eines Computers (z. B. Mausbewegungen oder verschiedene Parameter im Zusammenhang mit den Tastenschlägen) oder mehr oder weniger zufälligen Systemzuständen (z. B. Speicherinhalte oder beliebige interne Statistiken). Wie jedoch festgestellt wurde, ist die Unsicherheit dieser Ereignisse nicht so gross, wie dies wünschenswert wäre (im entscheidenden Moment werden z. B. immer etwa dieselben Mausbewegungen ausgeführt und die gedrückten Tasten sind häufig kleine Buchstaben, wobei oft zwischen der linken und der rechten Hand abgewechselt wird). Zudem ist eine Interaktion des Benutzers in der Regel unerwünscht.

Sehr gute Zufallszahlen liefern hingegen Zufallsgeneratoren, welche auf zufälligen physikalischen Eigenschaften wie dem elektrischen Rauschen einer Diode oder eines Transistors basieren. Diese sind jedoch nur mit zusätzlicher Hardware zu implementieren und damit entsprechend aufwendig und teuer.

### Darstellung der Erfindung

Aufgabe der Erfindung ist es, ein Verfahren und einen Zufallsgenerator der eingangs erwähnten Art anzugeben, welche die beim Stand der Technik vorhandenen Probleme vermeiden und insbesondere zur Generierung von Zufallszahlen hoher Qualität geeignet sind.

Die Lösung der Aufgabe ist verfahrensmässig durch die Merkmale der Ansprüche 1 bzw. 10 und vorrichtungsmässig durch die Merkmale der Ansprüche 11 bzw. 12 definiert. Gemäss der Erfindung umfasst das Verfahren zur Generierung einer Zufallszahl folgende Schritte:
a) Zunächst wird ein Zähler gestartet und hochgezählt.
b) Während der Zähler hochzählt, wird der Tick eines Taktgebers, beispielsweise ein bestimmter Tick der Systemzeit, abgewartet.
c) Danach wird der Zähler gestoppt und der Zählerwert wird bestimmt.
d) Anschliessend wird aus dem Zählerwert mit Hilfe einer mathematischen Funktion ein Zwischenwert berechnet.
e) Aus dem Zwischenwert wird schliesslich die Zufallszahl gebildet, indem eine vorgegebene Anzahl Ziffern des Zwischenwertes als eine entsprechende Anzahl Ziffern der Zufallszahl verwendet wird.

Die Systemuhr zählt in bestimmten Abständen einen Tick weiter und gibt auf diese Weise ein bestimmtes Zeitraster vor. Der Zeitpunkt, zu dem der Zähler gestartet wird, befindet sich an einem unbekannten Offset in diesem Raster. D. h. die Zeit, während welcher der Zähler hochgezählt wird, liegt zwischen 0 ms und der Zeitdauer zwischen zwei Rasterpunkten, was eine erste Unsicherheit beim resultierenden Zählerwert darstellt.

Eine weitere Unsicherheit folgt aus der Tatsache, dass das Abfragen der Systemzeit (um festzustellen, ob diese schon einen Tick weiter ist) ein Systemaufruf ist. Bei dieser Gelegenheit werden vom Prozessor nämlich weitere, anstehende Prozesse, deren Art und Abarbeitungszeit variieren können, abgearbeitet. Hierdurch wird das Hochzählen des Zählers in unvorhersagbarer Weise verzögert.

Um die ganze Unsicherheit, d. h. Zufälligkeit des Zählerwertes zu nutzen, wird der Zählerwert nicht direkt zur Bildung der Zufallszahl verwendet, sondern mit Hilfe einer mathematischen Funktion wird daraus zunächst ein Zwischenwert berechnet. Diese mathematische Funktion weist dabei die Eigenschaft auf, dass jedes Bit ihres Resultats von jedem Bit des Eingangswertes abhängt. Sie dient also dazu, die ganze Zufälligkeit der Eingangsdaten zu mischen und auf alle Bits der Ausgangsdaten zu verteilen. Ändert der Eingangswert (d. h. der Zählerwert) beispielsweise nur in einer Ziffer, resultiert ein völlig anderer Zwischenwert.

Zur Bildung der Zufallszahl wird eine bestimmte Anzahl Ziffern des Zwischenwertes, d. h. als Ziffern der Zufallszahl verwendet. Selbstverständlich können sämtliche Ziffern des Zwischenwertes verwendet werden, wobei, um die Unsicherheit zu erhöhen, im Allgemeinen eine geringere Anzahl Ziffern übernommen wird.

Allerdings werden in der Regel Zufallszahlen benötigt, deren Länge die Anzahl der verwendeten Ziffern des Zwischenwertes deutlich übersteigt. Bei einer bevorzugten Variante des erfindungsgemässen Verfahrens werden deshalb die Schritte a) bis e) mehrmals wiederholt. Sie werden beispielsweise solange wiederholt, bis genügend zufällige Ziffern zur Verfügung stehen.

Das Verfahren ist typischerweise softwaremässig implementiert und wird mit Vorteil auf einem Computer mit einem Prozessor und einem Speicher durchgeführt. Der Zählerwert, der Zwischenwert und die Zufallszahl werden entsprechend als binäre Ziffernfolgen dargestellt. Zur Bildung der Zufallszahl wird eine vorgegebene Anzahl Bits des Zwischenwertes verwendet, wobei insbesondere die zwei untersten Bits verarbeitet werden. Wird eine Zufallszahl der Länge 128 Bit benötigt, werden die Schritte a) bis e) 64-mal wiederholt.

Wie bereits erwähnt, wird der Zähler zu einem beliebigen Zeitpunkt gestartet. Dieser Zeitpunkt kann nun entweder frei gewählt oder aber ereignisgesteuert festgelegt werden. Eine bevorzugte Variante zur Festlegung des Zählerstartes besteht darin, durch den Prozessor eine bestimmte Operation, z. B. einen bestimmten Prozess, durchführen zu lassen und den Zähler zu starten, sobald dieser Prozess beendet ist. Dafür eignet sich insbesondere ein schreibender Speicherzugriff, wie er vom Prozessor durchgeführt wird, wenn er einige wenige Bytes in einen Speicher (beispielsweise Harddisk, Diskette etc.) schreiben muss.

Ein solcher Schreibprozess wird in der Regel zwar zu einem bestimmten Zeitpunkt (z. B. bei einem Systemaufruf) gestartet. Da jedoch wie schon beim Hochzählen des Zählers, nicht die volle Prozessorkapazität für diesen einen Prozess zur Verfügung steht, wird auch der Schreibvorgang selbst durch parallel ablaufende Prozesse (beispielsweise andere, gleichzeitig ablaufende Programme, Systemprozesse, Interrupts etc.) verzögert, was zur Folge hat, dass der Zähler zu einem mehr oder weniger zufälligen, weil nicht bestimmbaren, Zeitpunkt innerhalb des Taktgeber-Rasters gestartet wird.

Wie bereits erwähnt, wird als Taktgeber bevorzugt die Systemuhr verwendet, welche in bestimmten Zeitabständen jeweils einen Tick weiterzählt. Bei Windows NT ist dies beispielsweise ein 10 ms und bei Windows 95/98 ein 55 ms Raster. Der Zähler wird also vorzugsweise beim nächsten Tick der Systemuhr gestoppt. Selbstverständlich kann auch eine bestimmte Anzahl von Ticks abgewartet werden, bevor der Zähler gestoppt wird.

Das Resultat der mathematischen Funktion zur Berechnung des Zwischenwertes sollte wie bereits erwähnt die ganze Zufälligkeit des Zählerwertes berücksichtigen. D. h. bereits durch Ändern eines einzigen Bits des Zählerwertes soll ein völlig anderer Zwischenwert resultieren. Eine Klasse von Funktionen, welche diese Eigenschaften aufweisen, sind beispielsweise die zur digitalen Signierung von elektronischen Nachrichten benutzten Hashfunktionen, welche aus diesem Grund bevorzugt zur Berechnung des Zwischenwertes verwendet werden. Diese Funktionen generieren aus einer Eingangsbitfolge (Zählerwert) eine eindeutige Ausgangsbitfolge (Zwischenwert), welche als Hashwert bezeichnet wird. Dieser ist unabhängig von der Grösse der Eingangsbitfolge, d. h. also für alle Zählerwerte (von 0 bis beispielsweise zu einem maximalen Zählerwert von 2 ^ 32) immer gleich lang.

Eine der am häufigsten verwendeten und deshalb auch hier bevorzugt eingesetzten Hashfunktionen ist unter dem Namen MD5 (Message Digest 5) bekannt. Diese basiert auf einer sogenannten Einweg-Funktion, d. h. mit dem MD5-Algorithmus kann auf einfache und schnelle Weise der Hashwert einer Nachricht berechnet werden. Die Umkehrfunktion jedoch, d. h. die Berechnung der Originalnachricht aus dem Hashwert ist aufgrund des enormen rechnerischen Aufwandes praktisch unmöglich. Zur Berechnung des Zwischenwertes kann allerdings auch eine andere Hashfunktion, beispielsweise die SHA1 oder jede andere Funktion, welche die oben genannten Bedingungen erfüllt, benutzt werden.

Prinzipiell ist es möglich, die aus den ausgewählten Bits des bzw. der verschiedenen Zwischenwerte zusammengesetzte Zufallszahl direkt zu verwenden.

Bevorzugt wird diese Zufallszahl jedoch als Grundlage zur Erzeugung eines Startwertes für einen Pseudo-Zufallsgenerator verwendet, wobei die Zufallszahl auch selbst als Startwert verwendet werden kann. Ein Pseudo-Zufallsgenerator berechnet aus dem Startwert auf deterministische Art und Weise eine oder mehrere Pseudo-Zufallszahlen. Pseudo-Zufallszahlen haben die Eigenschaft, dass sie periodisch und damit nicht wirklich zufällig sind. Bei kryptographisch starken Pseudo-Zufallszahlen ist diese Periode jedoch sehr gross, weshalb sie von echten Zufallszahlen nur mit sehr grossem Rechenaufwand unterscheidbar sind. Zudem ist das Verfahren zur Erzeugung der Pseudo-Zufallszahlen so beschaffen, dass es praktisch unmöglich ist, aus bereits erzeugten Pseudo-Zufallszahlen auf die nächsten zu schliessen.

Der Vorteil, die aus den Zwischenwerten generierte Zufallszahl als Startwert eines Pseudo-Zufallsgenerators zu verwenden, besteht darin, dass aus einem Startwert eine Mehrzahl von Pseudo-Zufallszahlen generiert werden kann. Da die Berechnung der Pseudo-Zufallszahlen ein deterministischer Vorgang ist, kann dies, im Gegensatz zur Startwertgenerierung, mit hoher Geschwindigkeit und weniger Rechenaufwand erfolgen.

Für eine solche Berechnung einer Pseudo-Zufallszahl wird bevorzugt ein Pseudo-Zufallsgenerator eingesetzt, welcher ebenfalls auf dem MD5-Hashalgorithmus beruht, was eine mehrfache Resourcen-Verwendung ermöglicht.

Das erfindungsgemässe Verfahren eignet sich bestens zur Generierung von Schlüsseln für kryptographische Anwendungen. Beispielsweise Schlüssel für eine symmetrische oder eine asymmetrische Verschlüsselung, Schlüssel zur Gewährleistung von Authentizität und Integrität übertragener Nachrichten oder auch Schlüssel zur Zertifizierung anderer Schlüssel.

Ein Zufallsgenerator zur Durchführung des erfindungsgemässen Verfahrens umfasst einen Zähler, einen Taktgeber sowie eine Recheneinheit. Der Taktgeber tickt in einem bestimmten Rhythmus. Der Zähler wird zu einem beliebigen Zeitpunkt, beispielsweise durch Auftreten eines bestimmten Ereignisses, gestartet. Daraufhin zählt der Zähler hoch und wird gestoppt, wenn der Taktgeber eine bestimmte Anzahl Ticks, beispielsweise genau ein Tick, weitergezählt hat. Die Recheneinheit verarbeitet daraufhin den Zählerwert, indem sie daraus in bestimmter Art und Weise einen Zwischenwert berechnet. Aus diesem Zwischenwert wird die Zufallszahl gebildet, indem eine bestimmte Anzahl von Ziffern des Zwischenwertes als Ziffern der Zufallszahl verwendet werden. Von einer Zwischenwert-Bitfolge werden beispielsweise die untersten zwei Bits verwendet, indem sie an einer beliebigen Stelle der Zufallszahl eingesetzt werden.

Um aus dem eben beschriebenen Zufallsgenerator einen Pseudo-Zufallsgenerator zu erhalten, ist die Recheneinheit derart ausgebildet, dass sie die erzeugte Zufallszahl als Grundlage zur Erzeugung eines Startwertes verwendet, aus welchem danach eine Pseudo-Zufallszahl generiert wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung eines erfindungsgemässen Zufallsgenerators;
- Fig. 2: eine schematische Darstellung des erfindungsgemässen Verfahrens zur Generierung einer Zufallszahl;
- Fig. 3: eine detaillierte schematische Darstellung des Festplattenzugriffs und der Zählerinkrementation;
- Fig. 4: eine schematische Darstellung des erfindungsgemässen Verfahrens zur Generierung eines Startwertes für einen Pseudo-Zufallsgenerator und
- Fig. 5: eine schematische Darstellung des erfindungsgemässen Verfahrens zur Generierung einer Pseudo-Zufallszahl.

Grundsätzlich sind in den Figuren gleiche Teile mit gleichen Bezugszeichen versehen.

### Wege zur Ausführung der Erfindung

Die Figuren dienen zur Erläuterung der Erfindung anhand einer beispielhaften Realisierung.

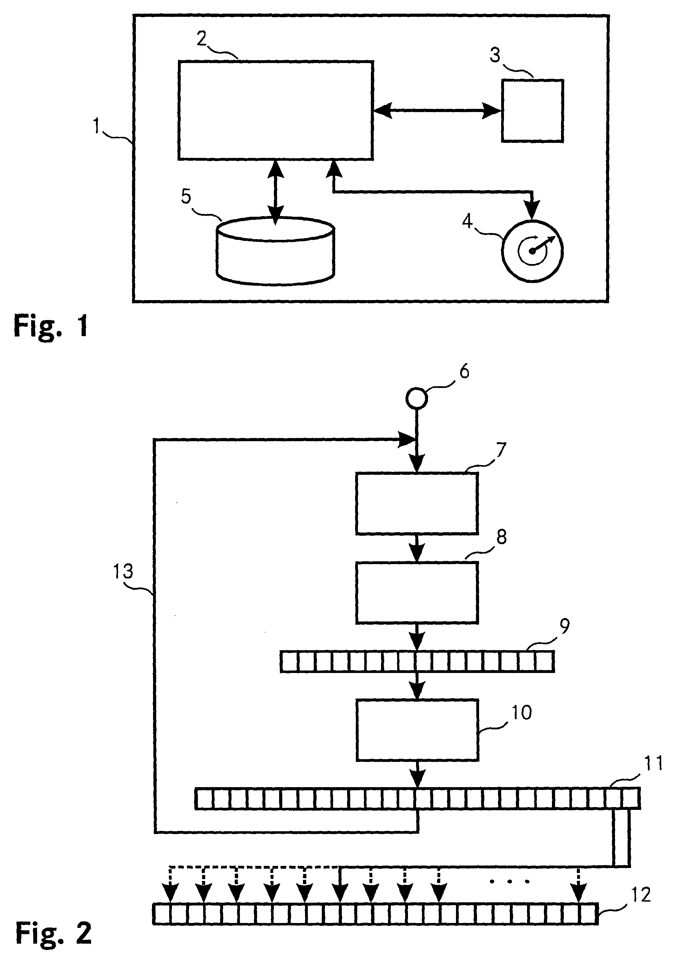

Figur 1 zeigt eine schematische Darstellung eines Computers 1, auf welchem das Verfahren zur erfindungsgemässen Generierung einer Zufallszahl abläuft. Der Computer 1 umfasst (neben anderen, nicht dargestellten Komponenten) einen Prozessor 2, einen Zähler 3, eine Systemuhr 4 und eine Festplatte 5. Der Prozessor 2 ist sowohl mit dem Zähler 3 als auch mit der Systemuhr 4 und der Festplatte 5 über entsprechende Schnittstellen und Bussysteme verbunden. Der Prozessor 2 ist zur Abarbeitung der verschiedenen Prozesse, beispielsweise Systemprozesse oder Anwendungsprozesse ausgebildet. Auf der Festplatte 5 können Daten, beispielsweise Ergebnisse von Anwendungen oder Zwischenresultate bei Berechnungen, ab- bzw. zwischengespeichert werden. Die Systemuhr 4 stellt dem Prozessor 2 die Systemzeit zur Verfügung, wobei die Systemzeit in einem bestimmten Intervall hochgezählt wird. Bei Windows NT zählt die Systemuhr 4 beispielsweise alle 10 ms und bei Windows 98 alle 55 ms einen Tick weiter. Der Zähler selbst ist beispielsweise softwaremässig als Zählerschlaufe realisiert, welche in beliebige Anwendungen integriert bzw. daraus aufgerufen werden kann.

Figur 2 zeigt das erfindungsgemässe Verfahren, wie es auf dem Prozessor 2 abläuft. Das Verfahren wird zu einem beliebigen Startpunkt 6 gestartet. Der Anstoss hierzu kommt beispielsweise von einer E-Mail-Anwendung, welche eine Zufallszahl zur Verschlüsselung einer zu versendenden Nachricht benötigt.

Zunächst wird ein Festplattenzugriff 7 durchgeführt, wobei der Prozessor 2 einige wenige Bytes, beispielsweise die Zeichenfolge "1234567890", in eine Datei auf der Festplatte 5 schreibt. Damit die Zeichen nicht zuerst in einem Zwischenspeicher abgelegt werden, wird ein entsprechender Parameter gesetzt, wodurch das Betriebssystem angewiesen wird, den Festplattenzugriff 7 nicht zu puffern. Nachdem die Zeichenfolge geschrieben ist, wird ein Zähler gestartet, welcher in einer Zählerschlaufe 8 solange inkrementiert wird, bis ein bestimmtes Ereignis, im gewählten Beispiel ist dieses Ereignis der nächste Tick der Systemuhr 4, eintritt. Selbstverständlich kann auch eine bestimmte Anzahl Ticks der Systemuhr 4 abgewartet werden, bis der Zähler 3 gestoppt wird. Nach bzw. vor jedem Inkrementieren des Zählers 3 wird also die Systemuhr 4 abgefragt und festgestellt, ob diese schon einen bzw. die gewünschte Anzahl Ticks weitergezählt hat oder nicht. Falls nein, wird der Zähler 3 weiter inkrementiert. Falls ja, wird der Zähler 3 gestoppt und der Zählerwert 9 des Zählers 3 ausgelesen.

Viele Bits des Zählerwertes 9, insbesondere die unteren Bits, weisen schon eine grosse Zufälligkeit, d. h. Unsicherheit auf. Der Zählerwert 9 wird jedoch nicht direkt als Zufallszahl, sondern er wird als Ausgangswert für eine Hashwert-Berechnung 10 verwendet. Der resultierende Hashwert 11 (Zwischenwert) wird hierbei auf eine bestimmte Art und Weise berechnet, sodass jedes Bit des Hashwertes 11 von jedem Bit des Zählerwertes abhängt. Dadurch weist jedes einzelne Bit des Hashwertes eine relativ hohe Unsicherheit auf.

Die Zufallszahl 12 wird schliesslich gebildet, indem jeweils eine bestimmte Anzahl Bits des Hashwertes 11 als eine entsprechende Anzahl Bits der Zufallszahl 12 verwendet werden. Welche und wieviele Bits des Hashwertes 11 verwendet werden, ist frei wählbar. Im dargestellten Beispiel werden die zwei untersten Bits des Hashwertes 11 verwendet. Um also eine Zufallszahl 12 zu generieren, die mehr als zwei Bits lang sein soll, wird das Verfahren in einer Schlaufe 13, welche pro Umlauf zwei zufällige Bits liefert, so oft durchlaufen, bis die Zufallszahl 12 die gewünschte Länge aufweist. Um Zufallszahlen mit 128 Bit Länge zu generieren, muss die Schlaufe 13 mit dem Festplattenzugriff 7, der Zählerschlaufe 8 sowie der Hashwert-Berechnung 10 somit 64-mal durchlaufen werden.

Die Erzeugungsrate für Zufalls-Bits, welche auf diese Weise generiert werden, bewegt sich je nach Betriebssystem und Rechner in einem Bereich von wenigen Dutzend bis wenigen Tausend Zufalls-Bits pro Sekunde. Bei einem Windows NT-Rechner mit 250 MHz Prozessor liegt die Erzeugungsrate in der Grössenordnung von 100 bis 200 Zufalls-Bits pro Sekunde.

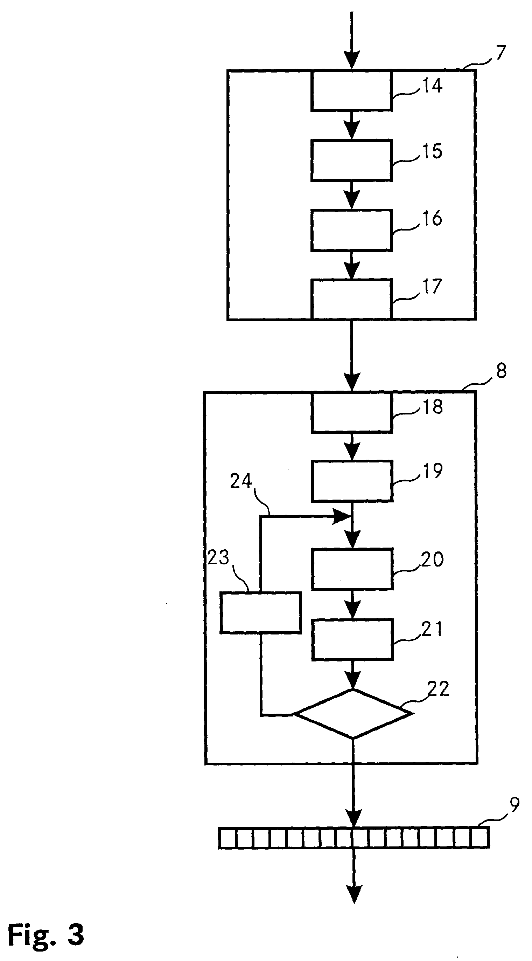

Figur 3 zeigt die beiden Verfahrensschritte Festplattenzugriff 7 und Zählerschlaufe 8 in einer detailreicheren Ansicht. Nachfolgend sind auf der linken Seite die jeweiligen Ausschnitte aus dem Quellcode eines entsprechenden Programmes aufgeführt und auf der rechten Seite die zugehörigen Erläuterungen angegeben:
- fp = fopen (tempFile, "wc") ;: In einem ersten Schritt Dateierstellung 14 wird auf der Festplatte zunächst eine temporäre Datei angelegt. Die Variable tempfile enthält den Namen der Datei und der Parameter "wc" gibt an, wie die Datei geöffnet bzw. wie Daten hineingeschrieben werden sollen.
- fprint (fp, "1234567890") ;: Im nächsten Schritt Zuweisung 15 wird die Zeichenfolge "1234567890" der Datei tempfile zugewiesen, d. h. (logisch) hineingeschrieben.
- fflush (fp) ;: Danach wird die Datei tempfile im Schritt Speicherung 16 physikalisch auf die Festplatte geschrieben (ohne Pufferung).
- fclose (fp) ;: Im Schritt Schliessen 17 wird die Datei tempfile wieder geschlossen.
- t = GetTickCount ( ) ;: In einer ersten Zeitabfrage 18 fragt der Prozessor 2 von der Systemuhr 4 die seit dem Start des Computers 1 verstrichene Zeit t in ms ab.
- for (i=0; GetTickCount ( ) - t<10;i++) ;: Danach wird der Zähler i in einer Schlaufe 24 hochgezählt, wobei i im Schritt Zählerinitialisierung 19 zunächst auf 0 gesetzt wird. Danach folgt eine zweite (bzw. dritte, vierte, ...) Zeitabfrage 20 und eine Prüfwertberechnung 21, wo das Zeitintervall zwischen der ersten und der zweiten (bzw. dritten, vierten, ...) Zeitabfrage 18 respektive 20 berechnet wird.
Im Entscheider 22 wird danach geprüft, ob das Ergebnis der Prüfwertberechnung kleiner als 10 ist. Falls ja, d. h. falls seit dem Start des Zählers noch keine 10 ms verstrichen sind, wird der Zähler im Schritt Inkrementierung 23 um eins erhöht und der Prozessor 2 springt zurück an den Anfang der Schlaufe 24. Falls seit dem Zählerstart bereits 10 ms oder mehr verstrichen sind, wird die Schlaufe 24 verlassen.

Da sowohl der Speicherzugriff als auch der Zählvorgang durch andere Prozesse beeinflusst werden, enthält der Zähler i auf diese Weise einen "zufälligen" Wert, welcher als Zählerwert 9 weitergegeben wird.

Wie bereits erwähnt, kann die derart generierte Zufallszahl 12 als zufällige Bitfolge verwendet werden. Häufig wird die Zufallszahl 12 jedoch zur Bildung einer Mehrzahl von Pseudo-Zufallszahlen verwendet. Im vorliegenden Beispiel wird hierzu ein ebenfalls auf der Hashfunktion MD5 basierender Algorithmus benutzt.

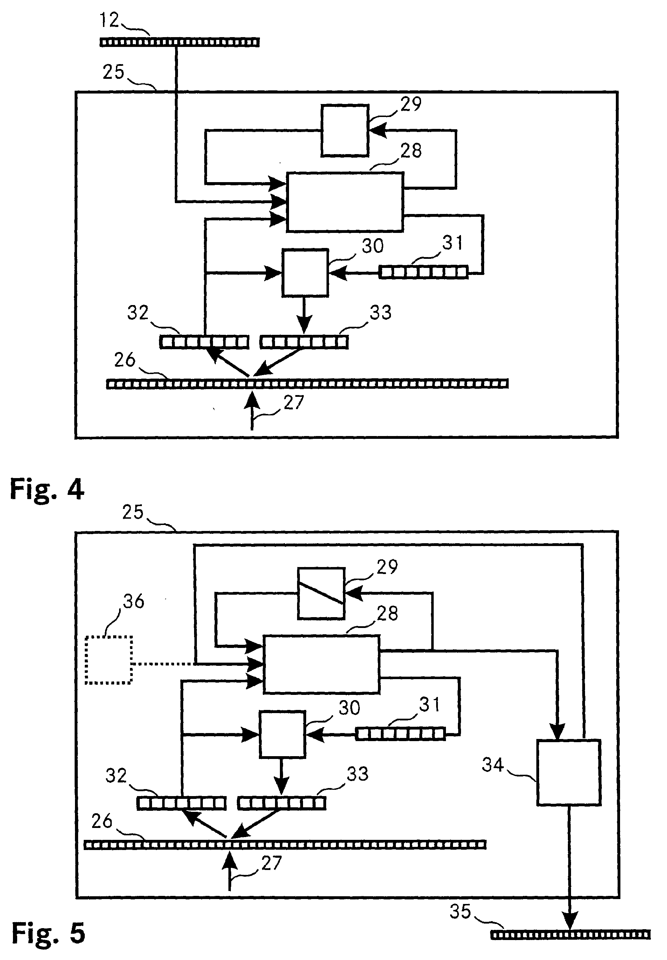

Figur 4 zeigt eine schematische Darstellung des erfindungsgemässen Verfahrens zur Generierung eines Startwertes eines Pseudo-Zufallsgenerators 25. D. h. mit Hilfe der Zufallszahl 12, welche entweder bereits als Ganzes vorliegt oder deren Bits laufend generiert werden, wird der Zustandsspeicher 26 des Pseudo-Zufallsgenerators 25 gefüllt.

Der Zustandsspeicher 26 ist ein Array von 1023 Bytes Länge. Ein Indexzeiger 27 speichert jeweils die aktuelle Position im Zustandsspeicher 26, welche als nächste bearbeitet werden soll. Beim ersten Aufruf steht der Indexzeiger 27 an Position 0.

Die Zufallszahl 12 wird in gleich grosse Blöcke der Länge k, beispielsweise 16 Bytes, unterteilt, wobei der letzte Block kleiner sein kann als die anderen, wenn weniger als die benötigten Anzahl Bits vorhanden sind. Jeder Block wird zusammen mit anderen Daten in einen Hashwert-Operator 28 eingespiesen, welcher aus allen Eingangsdaten einen neuen Hashwert berechnet. Dieser wird vollständig in einen Zwischenspeicher 29 geschrieben. Ein Teil des Hashwertes, beispielsweise ein k Byte grosses Hashwort 31, wird hingegen via einen XOR-Operator 30 in den Zustandsspeicher 26 geschrieben. Zu diesem Zweck wird an der aktuellen Position des Indexzeigers 27 ein ebenfalls k Byte grosses Zustandswort 32 entnommen und mit dem Hashwort 31 einer bitweisen XOR-Operation (exklusiv ODER) unterzogen. Das Resultat dieser Operation, d. h. der wiederum k Byte grosse Ausgabewert 33 des XOR-Operators 30 wird an der aktuellen Position des Indexzeigers 27 in den Zustandsspeicher 26 hineingeschrieben. Anschliessend wird der Indexzeiger 27 um die entsprechende Anzahl Positionen (k Bytes) nach vorne geschoben. Wird er dabei grösser als 1023, so wird er wieder auf 0 gesetzt (Rollmechanismus).

Die anderen Daten, welche zusammen mit einem Block der Zufallszahl 12 in den Hashwert-Operator 28 eingespiesen werden, bestehen aus dem Zustandswort 32, d. h. einem Teil des aktuellen Inhaltes des Zustandsspeichers 26, und aus dem Inhalt des Zwischenspeichers 29, d. h. dem zuletzt berechneten Hashwert des Hashwert-Operators 28.

Selbstverständlich müssen zur Initialisierung des Zustandsspeichers 26 nicht sämtliche Bits der Zufallszahl 12 mittels dem in den Figuren 1 bis 3 dargestellten Verfahren generiert werden. Es können auch andere zufällige Daten, beispielsweise Daten basierend auf der Systemzeit, des aktuellen Systemzustands oder dem "zufälligen" Speicherinhalt bestimmter Speicherzellen, verwendet werden. Es ist jedoch von Vorteil, wenn möglichst viele Bits auf die erfindungsgemässe Art und Weise generiert werden.

In Figur 5 ist die Erzeugung von Pseudo-Zufallszahlen 35 mit dem Pseudo-Zufallsgenerator 25 dargestellt. Dies läuft ähnlich ab wie das Füllen des Zustandsspeichers 26. Jeweils ein Teil des vom Hashwert-Operator 28 erzeugten Hashwertes, beispielsweise die obere Hälfte oder die oberen k Bytes werden ausgegeben und in einem Ausgangsspeicher 34 abgelegt. Die Pseudo-Zufallszahlen 35 werden aus dem Ausgangsspeicher 34 entnommen, wobei je nach Anzahl der benötigten Zufalls-Bits einfach mehrere Durchläufe gemacht werden.

Der Hauptunterschied zur Initialisierung besteht darin, dass nicht die Bits der Zufallszahl 12, sondern eine bestimmte Anzahl Bits aus dem Ausgangsspeicher 34 in den Hashwert-Operator 28 eingespiesen wird. Zudem wird pro Durchlauf jeweils nicht der gesamte Inhalt des Zwischenspeichers 29, sondern nur ein Teil, beispielsweise die höhere Hälfte in den Hashwert-Operator 28 eingespiesen.

Damit der Ausgangsspeicher 34 beim ersten Durchlauf nach einem Aufruf nicht leer ist, wird nach dem jeweils letzten, normalen Durchgang ein besonderer Durchgang absolviert. Hierzu wird anstatt der Werte aus dem Ausgangsspeicher 34 der Zählerwert eines weiteren Zählers 36 (gepunktete Linie) und nicht nur die höheren, sondern sämtliche Bytes der vorhergehenden Hashwert-Operation, in den Hashwert-Operator 28 eingespiesen. Der Zähler 36 enthält beispielsweise die Anzahl Aufrufe der entsprechenden Funktion zur Bereitstellung von Zufalls-Bits.

Zusammenfassend ist festzustellen, dass das erfindungsgemässe Verfahren die Generierung von Zufallszahlen hoher Qualität, d. h. mit hoher Unsicherheit ermöglicht, ohne auf physikalische Zufallsvorgänge wie beispielsweise das Rauschen einer Diode zurückzugreifen. Erfindungsgemässe Zufallsgeneratoren können nicht nur in den hier erwähnten kryptographischen Anwendungen, sondern auch überall dort eingesetzt werden, wo zufällige bzw. unvorhersagbare Bitfolgen benötigt werden.

## Patentansprüche

1. Verfahren zur Generierung einer Zufallszahl, **dadurch gekennzeichnet, dass** es folgende Schritte umfasst:
a) einen Zähler starten und hochzählen,
b) einen Tick eines Taktgebers abwarten,
c) den Zähler stoppen und einen Zählerwert bestimmen,
d) aus dem Zählerwert mit Hilfe einer mathematischen Funktion einen Zwischenwert berechnen und
e) eine vorgegebene Anzahl Ziffern des Zwischenwertes als eine entsprechende Anzahl Ziffern der Zufallszahl verwenden.

2. Verfahren nach Anspruch 1, **dadurch gekennzeichnet, dass** die Schritte a) bis e) mehrmals wiederholt werden, um Zufallszahlen grosser Länge zu generieren.

3. Verfahren nach Anspruch 1 oder 2, **dadurch gekennzeichnet, dass** es auf einem Computer mit einem Prozessor und einem Speicher durchgeführt wird und der Zählerwert, der Zwischenwert und die Zufallszahl als binäre Ziffernfolgen dargestellt werden, wobei eine vorgegebene Anzahl Bits des Zwischenwertes, insbesondere die zwei untersten Bits, zur Bildung der Zufallszahl verwendet werden.

4. Verfahren nach einem der Ansprüche 1 bis 3, **dadurch gekennzeichnet, dass** der Zähler gestartet wird, sobald der Prozessor eine bestimmte Operation, insbesondere einen schreibenden Speicherzugriff, abgeschlossen hat.

5. Verfahren nach Anspruch 3 oder 4, **dadurch gekennzeichnet, dass** der Computer einen Systemtakt, insbesondere ein Zeitraster zur Aktualisierung einer Systemzeit, vorgibt und der Zähler bis zum nächsten Tick des Systemtaktes hochgezählt wird.

6. Verfahren nach einem der Ansprüche 1 bis 5, **dadurch gekennzeichnet, dass** der Zwischenwert als Hashwert des Zählerwertes berechnet wird.

7. Verfahren nach Anspruch 6, **dadurch gekennzeichnet, dass** der Hashwert des Zählerwertes mit einem MD5-Algorithmus berechnet wird.

8. Verfahren nach einem der Ansprüche 1 bis 7, **dadurch gekennzeichnet, dass** die Zufallszahl zur Erzeugung eines Startwertes für einen Pseudo-Zufallsgenerator verwendet wird.

9. Verfahren nach Anspruch 8, **dadurch gekennzeichnet, dass** der Pseudo-Zufallsgenerator aus dem Startwert mit einem auf einem MD5-Algorithmus basierenden Rechenverfahren eine Pseudo-Zufallszahl generiert.

10. Verfahren zur Generierung eines Schlüssels für kryptographische Anwendungen in Nachrichtenübertragungssystemen, **dadurch gekennzeichnet, dass** der Schlüssel als Zufallszahl bzw. Pseudo-Zufallszahl mit einem Verfahren nach einem der Ansprüche 1 bis 8 generiert wird.

11. Zufallsgenerator mit einem Zähler, einem Taktgeber und einer Recheneinheit, **dadurch gekennzeichnet, dass** der Zufallsgenerator derart ausgebildet ist, dass durch Starten und Hochzählen des Zählers bis zu einem nächsten Tick des Taktgebers ein Zählerwert bestimmt, mit der Recheneinheit aus dem Zählerwert ein Zwischenwert berechnet und durch Verwendung einer vorgegebenen Anzahl Ziffern des Zwischenwertes eine Zufallszahl gebildet werden kann.

12. Pseudo-Zufallsgenerator umfassend einen Zähler, einen Taktgeber und eine Recheneinheit, **dadurch gekennzeichnet, dass** der Pseudo-Zufallsgenerator derart ausgebildet ist, dass durch Starten und Hochzählen des Zählers bis zu einem nächsten Tick des Taktgebers ein Zählerwert bestimmt, mit der Recheneinheit aus dem Zählerwert ein Zwischenwert berechnet, durch Verwendung einer vorgegebenen Anzahl Ziffern des Zwischenwertes eine entsprechende Anzahl Ziffern eines Startwertes für den Pseudo-Zufallsgenerator bestimmt und mit der Recheneinheit aus dem Startwert eine Pseudo-Zufaliszahl generiert werden kann.
